(19) Europäisches Patentamt

European Patent Office

Office européen des brevets

(11) **EP 0 695 282 B1**

(12) **FASCICULE DE BREVET EUROPEEN**

(45) Date de publication et mention
de la délivrance du brevet:
**14.11.2001 Bulletin 2001/46**

(21) Numéro de dépôt: **95909004.4**

(22) Date de dépôt: **10.02.1995**

(51) Int Cl.7: **C04B 41/90**, H05B 6/12,
A47J 36/04

(86) Numéro de dépôt international:
**PCT/FR95/00159**

(87) Numéro de publication internationale:
**WO 95/21802 (17.08.1995 Gazette 1995/35)**

(54) **SUBSTRAT GENERATEUR DE CHALEUR PAR INDUCTION SUR UN RECIPIENT CERAMIQUE OU VITROCERAMIQUE**

AUF EINEM KERAMISCHEN ODER GLASKERAMISCHEN TRÄGERMATERIAL AUFGEBRACHTES SUBSTRAT, DAS DURCH INDUKTION WÄRME ERZEUGT

INDUCTION HEATING SUBSTRATE FOR CERAMIC OR VITROCERAMIC CONTAINERS

(84) Etats contractants désignés:
**AT BE CH DE DK ES FR GB GR IE IT LI LU MC NL PT SE**

(30) Priorité: **11.02.1994 FR 9401566**

(43) Date de publication de la demande:
**07.02.1996 Bulletin 1996/06**

(73) Titulaire: **F. Deshouliers (S.A.)**
**86300 Chauvigny (FR)**

(72) Inventeur: **VIGNAUD, Jacques, Gilles**
**F-86300 Chauvigny (FR)**

(74) Mandataire: **Viard, Jean**
**Cabinet Madeuf-Viard**
**56A, Rue du Faubourg Saint-Honoré**
**75008 Paris (FR)**

(56) Documents cités:
**GB-A- 2 010 054        GB-A- 2 099 760**
**GB-A- 2 186 478        US-A- 5 155 319**

- **PATENT ABSTRACTS OF JAPAN vol. 15, no. 114 (E-1047) 19 Mars 1991 & JP,A,03 004 479 (SONY CORP) 10 Janvier 1991**
- **PATENT ABSTRACTS OF JAPAN vol. 13, no. 421 (E-822) 19 Septembre 1989 & JP,A,01 157 088 (MATSUSHITA ELECTRIC IND CO LTD) 20 Juin 1989**

## Description

La présente invention a pour objet substrat générateur de chaleur par induction sur un récipient en céramique ou vitrocéramique (porcelaine, faïence, terre cuite, grès, vitrious, etc.).

Dans les foyers domestiques ou dans la restauration collective, le chauffage par induction se répand de plus en plus et tend à remplacer, en partie, le chauffage par transmission.

La bobine de la table à induction crée un champ magnétique alternatif dont la fréquence est généralement de 25 à 45 KHz. Lorsqu'elle a lieu, la production de chaleur relève de deux mécanismes différents selon les propriétés des matériaux mis en oeuvre :

- Si le matériau est principalement conducteur de l'électricité, l'échauffement est dû à la génération de courants de Foucault dont la circulation entraîne un effet Joule important utilisé pour la cuisson ou le réchauffage des aliments.
- Si le matériau présente principalement des propriétés magnétiques (en particulier des propriétés ferromagnétiques), c'est l'énergie magnétique dissipée qui crée l'échauffement.

L'intensité des courants de Foucault est fonction de l'intensité et de la fréquence du champ magnétique extérieur. Par ailleurs, le sens de ces courants est tel que le champ magnétique qu'ils engendrent tend à s'opposer au champ extérieur empêchant ce dernier d'agir au coeur du conducteur. C'est ce que l'on appelle l'effet de peau et l'épaisseur de matériau affectée par ces courants est d'autant plus grande que la fréquence du champ extérieur est faible, ce qui est le cas des tables à induction du commerce.

Malheureusement, les matériaux céramiques qui constituent une proportion importante des récipients destinés aux aliments, ne sont ni magnétiques ni conducteurs de l'électricité. Il ne peuvent donc pas, à priori, être utilisés dans le chauffage par induction.

Il a déjà été proposé dans FR-A- 2 671 709, de disposer sur un récipient en matériau non métallique, un film multicouches conducteur de la chaleur pour absorber les ondes électromagnétiques et l'énergie des micro-ondes. A cet effet, une couche 1 recueille la chaleur d'une couche 2 absorbant l'énergie des ondes électromagnétique, ces couches étant recouvertes d'une couche de protection 3. La couche 2 est constituée d'or sous forme de crème, de poudre d'argent et d'huile. La formation et le dépôt de ces couches nécessitent une longue série d'opérations.

GB-A- 2 010 054 propose un système de cuisson complet intégré dans lequel la bobine d'induction et le récipient sont inclus dans une enceinte thermiquement isolée pour limiter les pertes de chaleur du récipient.

La présente invention a pour objet de pallier cet inconvénient et de permettre la pose d'une couche magnétique et/ou conductrice de l'électricité en une seule opération, comme c'est le cas avec une barbotine d'émail au moyen d'un pinceau ou par sérigraphie, tampographie à chaud ou à froid. De préférence, le dépôt est effectué sous la forme d'une décalcomanie incluant le substrat conducteur.

Pour les raisons ci-dessus, il n'est pas nécessaire que la couche ainsi déposée soit ferromagnétique ou ferrimagnétique pour que le récipient s'échauffe; il suffit qu'elle soit principalement bonne conductrice de l'électricité.

Selon l'invention, le procédé de fabrication d'un récipient culinaire en matière céramique incluant un moyen de chauffage par induction dont la fréquence est comprise entre 25 et 45 kHz est caractérisé en ce qu'il consiste à déposer par décalcomanie, directement sur le fond du récipient, en une seule opération, une couche mince de matériau amagnétique conducteur de l'électricité recouverte d'une couche d'émail puis à cuire l'ensemble à une température de l'ordre de 840°C, la couche conductrice étant apte à générer des courants de Foucault.

Cette pose effectuée par une technique traditionnelle dans le domaine céramique peut être mise en oeuvre, après application du décor éventuel ou simultanément à celle-ci. Une seule opération supplémentaire de cuisson est éventuellement nécessaire ce qui ne modifie pas sensiblement le processus traditionnel de fabrication et de décoration d'objets en céramique.

Dans le cas où la couche est simplement conductrice de l'électricité, sa composition est, par exemple, la suivante : 58% à 83% en poids de métal en poudre, 2% de fritte, le reste étant constitué de résine et de solvants d'empâtage.

Le métal est choisi parmi les métaux ayant une faible résistivité et une température de fusion importante par exemple de l'argent. D'autres métaux, peuvent également convenir, sachant que la puissance restituée par le milieu où naissent les courants de Foucault est régie par une loi de la forme :

$$P_{watts} = \text{Fonction } [\sqrt{\rho^* \mu_r^* f}]$$

dans laquelle :

- $\rho$ est la résistivité du corps en $\mu\Omega$ cm
- $\mu_r$ est la perméabilité du milieu
- $f$ la fréquence du courant électrique en Hz

L'étude par microscopie optique montre que l'accrochage entre la couche d'argent et la céramique est essentiellement de nature mécanique. L'argent de la surface pénètre dans les porosités du tesson ou de la couche d'émail. Son épaisseur moyenne est comprise entre 25 et 35µ. La résistivité électrique très faible de la couche est de l'ordre de celle de l'argent pur, soit 2,5

μ.Ωcm et n'excède pas 2μΩ cm en surface. Les résines et solvants ont pour but de permettre l'application de la couche de métal sur la porcelaine. De préférence une couche externe de protection est déposée sur la couche active.

Dans le cas où la couche conductrice est une base d'argent, on utilise la propriété de faible résistivité de ce matériau, mais en complément de cette propriété, la poudre d'argent de bas utilisée est une poudre présentant une surface spécifique BET, comprise entre 1 et 2m$^2$/g et une taille de particule telle que :

- 100 % des grains d'argent sont inférieurs à 12 μ
- 50 % des grains d'argent sont inférieurs à 3,9 μ
- 10 % des grains d'argent sont inférieurs à 1,5 μ

Le film préparé à partir de cette poudre est composé de grains fins, autour d'un diamètre moyen de 0,75 μ, allant de 0,15 μ à 30 μ.

A température ambiante, la résistivité de la couche est de l'ordre de 60 μΩ.cm. Lors de l'élévation de température, la dilatation des joints inter granulaires éloigne les particules d'argent, en même temps qu'elle permet à la couche de se dilater sensiblement dans le même rapport que le support, sans provoquer de rupture entre le tesson et celle-ci.

La dilatation inter granulaire provoque une augmentation significative, de la résistivité de la couche conductrice, jusqu'à une résistance telle, qu'elle annule le courant induit qui assure l'échauffement.

Ainsi par ce moyen, est assurée la thermorégulation de cette couche conductrice, à une température inférieure ou égale à 100°C en ajustant sur la répartition et l'épaisseur de ladite couche.

Cette double propriété permet de limiter la température du récipient à un niveau bas inférieur à 100°C, suffisante, pour assurer le maintien en température des aliments, tout en protégeant le récipient céramique d'un choc thermique qui amènerait sa destruction, et ce, quelle que soit la puissance programmée sur la plaque de chauffage du commerce.

La fabrication d'un tel récipient fait appel uniquement à des opérations qui sont familières aux porcelainiers. Elle ne modifie pas le process classique de fabrication de la porcelaine et ne nécessite aucun matériel spécial.

La couche conductrice se dépose comme un décor classique et elle est fixée définitivement sur la pièce par exposition à la température (840°) d'un four de cuisson décor.

L'un des intérêts de la méthode de réchauffage consiste en ce qu'un récipient, tel qu'une assiette, peut être réchauffé ou chauffé localement à basse température. Dans le cas d'une assiette, si seul le fond est recouvert d'une couche selon l'invention, seul le fond sera chaud et il sera aisé de saisir l'assiette par son bord, procédé exclusif répondant parfaitement aux besoins domestiques et à ceux des professionnels de la restauration.

Dans le cas de "plats culinaires" à fonds plats, dits "thermiques", qu'il convient simplement de réchauffer ou de finir de cuire à feu doux, la couche absorbante est, de préférence disposée à l'intérieur du récipient toujours sur le fond. Dans ce cas, une couche de protection est indispensable (avec fritte en poudre de verre type émail).

On a pu observer qu'un tel récipient, lorsqu'il est amené dans un four à microondes, ne produit pas d'arc de décharge malgré la présence d'une couche conductrice. Cette particularité permet de réchauffer au four micro-ondes des plats préparés sans avoir à craindre la détérioration du générateur à micro-ondes par amorçage d'arcs électriques. Pour améliorer la résistance à l'usure et à la corrosion par les produits de lavage, une couche d'émail est déposée sur le film actif et en assure la recouvrement et la protection définitive après la phase de cuisson d'accrochage.

La présente invention vise également une décalcomanie pour la mise en oeuvre du procédé , comprenant, sur une feuille de vernis sublimable à haute température, un décor composé d'une couche de matériau conducteur de l'électricité.

## Revendications

1. Procédé de fabrication d'un récipient culinaire en matière céramique incluant un moyen de chauffage par induction dont la fréquence est comprise entre 25 et 45 kHz,
   **caractérisé en ce qu'**il consiste à déposer par décalcomanie, directement sur le fond du récipient, en une seule opération, une couche mince de matériau amagnétique conducteur de l'électricité recouverte d'une couche d'émail puis à cuire l'ensemble à une température de l'ordre de 840°C, la couche conductrice étant apte à générer des courants de Foucault.

2. Récipient en céramique obtenu par le procédé selon la revendication 1, **caractérisé en ce que** la composition de la couche conductrice de l'électricité est la suivante : 58 à 83% en poids de métal en poudre, 2% de fritte, le reste étant constitué de résine et de solvants, l'épaisseur de la couche étant comprise entre 25 et 35 μ.

3. Récipient selon la revendication 2, **caractérisé en ce que** la valeur limite de régulation de température est déterminée en faisant varier la résistivité de la couche conductrice d'argent par dilatation des joints vitrocéramiques des grains d'argent de ladite couche, le diamètre des grains d'argent étant compris entre 0,15 et 30 μ avec un diamètre moyen de 0,75 μ.

**Patentansprüche**

1. Verfahren zur Herstellung eines Kochgefässes aus Keramik, mit einem Heizmittel durch Induktion, dessen Frequenz zwischen 25 und 45 kHz liegt, **dadurch gekennzeichnet, dass** es darin besteht, durch ein Abziehbilderverfahren, direkt auf den Boden des Gefässes, während eines einzigen Vorgangs, eine dünne Schicht eines nicht magnetischen, elektrizitätsleitenden, mit einer Deckemailschicht versehenen Werkstoffes aufzutragen und anschliessend das Ganze bei einer Temperatur von 840°C zu brennen, wobei die leitende Schicht fähig ist, Wirbelströme zu erzeugen.

2. Gefäss aus Keramik hergestellt gemäss dem Verfahren nach Anspruch 1, **dadurch gekennzeichnet, dass** die Zusammensetzung der elektrizitätsleitenden Schicht folgende ist : 58 bis 83 Gew.% Metall in Puderform, 2 % Fritte, der Rest bestehend aus Harz und Lösungsmitteln, wobei die Dicke der Schicht zwischen 25 und 35 µ beträgt.

3. Gefäss nach Anspruch 2, **dadurch gekennzeichnet, dass** der Grenzwert für die Temperaturregelung durch Veränderung der Resistivität der leitenden Silberschicht durch Ausdehnung der glaskeramischen Verbindungsstellen der Silberkörner der besagten Schicht bestimmt wird, wobei der Durchmesser der Silberkörner zwischen 0,15 und 30 µ beträgt, mit einem mittleren Durchmesser von 0,75 µ.

**Claims**

1. Method for manufacturing a ceramic cooking container including an induction heating means the frequency of which is comprised between 25 and 45 kHz,
   **characterized in that** it consists in laying by transfer process, directly onto the bottom of the container, in only one step, a thin layer of an electrically conducting amagnetic material covered with a layer of enamel, then cooking the assembly to a temperature of about 840°C, the conducting layer being able to generate eddy currents.

2. Ceramic container obtained by the method according to claim 1, **characterized in that** the composition of the electrically conducting layer is as follows : 58 to 83% by weight of powdered metal, 2% of frit, the remainder being constituted of resin and solvents, the thickness of the layer being comprised between 25 and 35 µ.

3. Container according the claim 2, **characterized in that** the temperature control limit value is determined by varying the resistivity of the silver conducting layer by expansion of the vitroceramic joints of the silver grains of said layer, the diameter of the silver grains being comprised between 0.15 and 30 µ with an average diameter of 0.75 µ.